# EUROPEAN PATENT APPLICATION

(11) **EP 4 789 951 A1**
(43) Date of publication of application: **12.08.2026**
(21) Application number: 26152078.7
(22) Date of filing: 15.01.2026
(51) Int. Cl.: B62D 5/04, B62D 15/02, B62D 7/14

(54) **REAR WHEEL STEERING DEVICE**

(30) Priority: 05.02.2025 JP 2025017850
(71) Applicant: AISIN CORPORATION, Aichi 448-8650 (JP)
(72) Inventor: SAKAUCHI, Kazuma, Kariya, Aichi 448-8650 (JP); UMEMOTO, Hidekazu, Kariya, Aichi 448-8650 (JP); TAKAHASHI, Akira, Kariya, Aichi 448-8650 (JP)
(74) Representative: TBK

(57) **Abstract**

A rear wheel steering device (A) includes, in a housing (4): a drive unit (M); a rod (3) reciprocating along an axis (X) of the rod (3) in a non-rotating state by the drive unit (M); and a displacement detecting unit (S) detecting displacement of the rod (3). The displacement detecting unit (S) includes a magnet (24) fixed to the rod (3) and reciprocating together with the rod (3), a pair of elements (25) dispersedly arranged along the axis (X) and arranged in a state in which ranges in which strength of a magnetic field formed by the magnet (24) is detected overlap with each other, and a control unit (C) calculating a position of the magnet (24) along the axis (X) with respect to the pair of elements (25) from a detection result obtained by at least one of the pair of elements (25). When a distance between an end portion of one of the pair of elements (25) and an end portion of the other of the pair of elements (25), the end portions farthest from each other among combinations of end portions of the pair of elements (25), is defined as an inter-element distance, a length of the magnet (24) along the axis (X) is shorter than the inter-element distance.

## Description

### TECHNICAL FIELD

The present disclosure relates to a rear wheel steering device capable of measuring displacement of a rod by reciprocating the rod by a drive unit and arranging a magnet and an element for measuring magnetic field intensity of the magnet on the rod and a housing, respectively, the rod and the housing moving relative to each other.

### BACKGROUND DISCUSSION

Conventionally, such a rear wheel steering device is disclosed in, for example, JP 2018-119937 A (see [0026] to [0041] and Fig. 1).

The rear wheel steering device includes a nut member 36 that is electrically driven and a rod 2 screwed into the nut member 36, and linearly reciprocates the rod 2 by rotational movement of the nut member 36. A displacement detecting device 5 for the rod 2 detects the axial displacement of the rod 2, and includes a displacement sensor 5a and a permanent magnet 5b. The permanent magnet 5b is formed of a neodymium magnet and is held by a magnet block 50. On the other hand, the displacement sensor 5a includes a magnetic vector sensor and is positioned to face the permanent magnet 5b. The one permanent magnet 5b and the one displacement sensor 5a are attached.

In this conventional art, in order to prevent backlash and rotation during movement of the rod 2, biasing mechanisms 60 using disk springs 61 are provided on both sides of the magnet block 50, and are configured to abut against standing wall portions 12w and 12w of a housing 1. The urging force of the disk spring 61 prevents backlash of the rod 2 in the rotation direction, and the magnet block 50 and the rod 2 are held so as not to be rotatable with respect to the housing 1.

In the above-described conventional rear wheel steering device capable of preventing backlash of the magnet block 50 when the rod 2 moves, accuracy in detecting displacement of the rod 2 is somewhat improved. However, only the one displacement sensor 5a and the one magnet block 50 are provided inside the housing 1, and the range in which the magnet block 50 is detected has a certain limit.

For example, in the conventional art, in a case where it is desired to increase the stroke amount, it is necessary to extend the entire length of the magnet in proportion to the desired stroke amount. This is because the interval between the magnet and the displacement sensor 5a needs to be kept within a predetermined distance in order to ensure the accuracy of magnetic field detection by the displacement sensor 5a. Therefore, the sizes of the displacement detecting device 5 and the rear wheel steering device increase, the mountability deteriorates, and the manufacturing cost of the magnet and the magnet block increases.

A need thus exists for a rear wheel steering device that has a wide displacement measurement range and a reasonable configuration.

### SUMMARY

### (Characteristic configuration)

A characteristic configuration of a rear wheel steering device according to the present disclosure includes:
a drive unit that is provided in a housing;
a rod that is provided in the housing and reciprocates along an axis of the rod in a non-rotating state by the drive unit; and
a displacement detecting unit that is provided in the housing and detects displacement of the rod,
the displacement detecting unit including
a magnet that is fixed to the rod and reciprocates together with the rod,
a pair of elements that are dispersedly arranged along the axis and are arranged in a state in which ranges in which strength of a magnetic field formed by the magnet is detected overlap with each other, and
a control unit that calculates a position of the magnet along the axis with respect to the pair of elements from a detection result obtained by at least one of the pair of elements,
in which when a distance between an end portion of one of the pair of elements and an end portion of the other of the pair of elements, the end portions farthest from each other among combinations of end portions of the pair of elements, is defined as an inter-element distance, a length of the magnet along the axis is shorter than the inter-element distance.

### (Effects)

In the detection method including one magnet and one element like the conventional rear wheel steering device, the length of the magnet has to be increased in order to expand the detection range. In this respect, in the rear wheel steering device of the present configuration, the plurality of elements are arranged with respect to the magnet, and the element for detecting the magnetic field of the magnet can be sequentially switched when the magnet reciprocates. The magnetic field detection range of one element is determined by the size and the strength of the magnetic field of the magnet, but the range in which the magnetic field of the magnet is detected is increased by overlapping the magnetic field detection ranges of the pair of elements.

By providing the plurality of elements as described above, the range in which the position of the magnet is detected can be expanded while keeping the dimension of the magnet small. If the dimension of the magnet is kept compact, inconvenience such as interference of the magnet with another object in the reciprocating operation of the rod to which the magnet is attached hardly occurs, and the reciprocating stroke of the rod is easily increased.

With the present configuration, the rear wheel steering angle can be increased while keeping the device size compact, and the rear wheel steering device excellent in mountability can be obtained.

In particular, in the present configuration, when the distance between an end portion of one of the pair of elements and an end portion of the other of the pair of elements, the end portions farthest from each other among combinations of end portions of the pair of elements, is defined as an inter-element distance, the length of the magnet along the axis is shorter than the inter-element distance. In this case, when the magnet reciprocates between both elements and transitions from the detection state by one element to the detection state by the other element, it is not necessary for the magnet to simultaneously and completely overlap both elements in the direction orthogonal to the axis. Therefore, the length of the magnet in the axial direction can be shortened, the configuration of the displacement detecting unit is simplified, and movement of the magnet becomes smooth.

### (Characteristic configuration)

In the rear wheel steering device according to the present disclosure, the length of the magnet can be set to a length at which the magnet and the pair of elements do not overlap each other simultaneously in a direction orthogonal to the axis in a case where the magnet is positioned between the pair of elements.

### (Effects)

The present configuration utilizes the fact that the range in which the magnetic field of the magnet is detected by one element is formed to spread on both sides of the element along the axis. That is, the magnet does not necessarily overlap both the pair of elements in the direction orthogonal to the axis, the pair of elements being arranged at predetermined positions. In a case where the magnet is located between the pair of elements, the magnet can be in a state of not overlapping any element. In addition, even in a case where the magnet is located outside any one of the elements, the magnet can be displaced to a position not overlapping the element in the direction orthogonal to the axis.

Therefore, in a case where the elements are set at a predetermined distance from each other, the length of the magnet can be shortened while using only the one magnet. The separation distance between the magnet and the element along the axis can be appropriately set on the basis of, for example, the value of the magnetic field intensity detected by the element.

### (Characteristic configuration)

In the rear wheel steering device according to the present disclosure, when the rod is at a reference position with respect to the housing, it is advantageous that a position of the magnet along the axis is set to be different from a center position of the pair of elements in a direction along the axis.

### (Effects)

One of the elements that is closer to the center position of the magnet, that is, the element having a higher detection value of the magnetic field intensity is used for position detection of the magnet. In this case, by making the distances between the magnet and respective elements different at the reference position of the rod, the element used when the rod is at the reference position can be fixed to one of the elements. According to the present configuration, the element used at the steering angle neutral position is always fixed to the element closer to the magnet. Therefore, measurement fluctuation particularly at the steering angle neutral position is eliminated, and the stability of steering driving is increased.

### (Characteristic configuration)

In the rear wheel steering device according to the present disclosure, a temperature detecting device may be provided outside the housing, the control unit may store a magnetic field intensity value of the magnet at the reference position, and a position of the rod may be adjusted by correcting the magnetic field intensity value according to a detected temperature detected by the temperature detecting device in a case where the detected temperature is within a predetermined range.

### (Effects)

The rod provided with the magnet expands and contracts according to the environmental temperature in some cases. For example, in a case where the rod thermally expands at a high temperature, the position of the magnet is displaced from the reference position. The rod is the main axis of the rear wheel steering device of a vehicle, and when the position of the magnet is set on the basis of the magnetic field intensity value stored in the control unit, the position of the rod is displaced from the actual steering angle neutral position, which gives the driver a sense of incongruity.

The present configuration includes the temperature detecting device, and therefore has a function of correcting the reference position of the magnet. That is, the expansion/contraction amount of the rod is calculated from the difference between the magnetic field intensity value stored in the control unit and the occasional detection value of temperature, and the reference position of the rod is optimized.

In particular, in the present configuration, in a case where the magnet is at the neutral position, each element can detect the position of the magnet, and the correction accuracy can be enhanced, for example, by amplifying the difference between the detection values obtained by the elements.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a cross-sectional view illustrating a configuration of a rear wheel steering device according to a first embodiment;
Fig. 2 is a cross-sectional view illustrating a drive unit of the rear wheel steering device according to the first embodiment;
Fig. 3 is a cross-sectional view illustrating a position detecting unit of the rear wheel steering device according to the first embodiment;
Fig. 4 is a perspective view illustrating details of the position detecting unit according to the first embodiment;
Fig. 5A, Fig. 5B, and Fig. 5C are explanatory diagrams illustrating a position detection mode according to the first embodiment;
Fig. 6 is an explanatory diagram illustrating an example of an arrangement mode of a magnet according to the first embodiment; and
Fig. 7 is a flowchart illustrating a position detection mode according to the first embodiment.

### DETAILED DESCRIPTION

### [First Embodiment]

### (Overview)

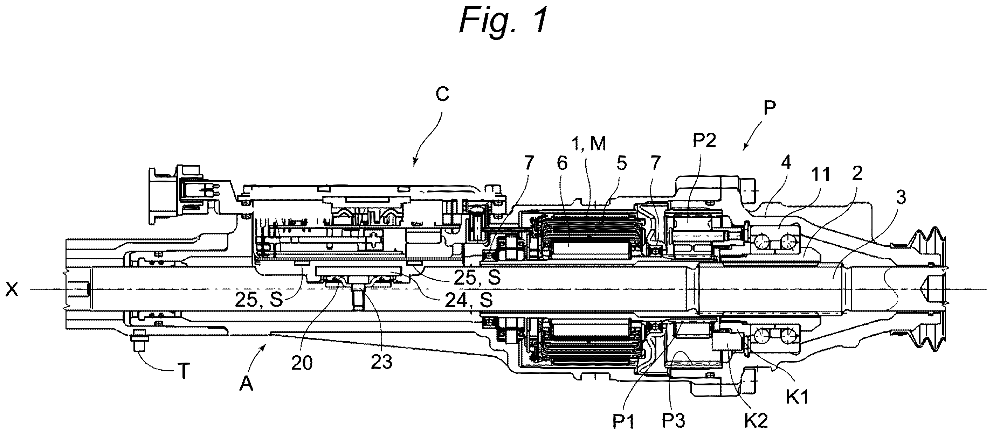

A rear wheel steering device A according to the present disclosure is illustrated in Fig. 1, for example. In the rear wheel steering device A, for example, a cylindrical nut 2 is rotationally driven by an electric motor 1, which is a drive unit M, and a rod 3 screwed and inserted into the nut 2 is reciprocated. A sliding surface abutting on an inner surface of a housing 4 of the rear wheel steering device A is formed on part of the rod 3, and the rod 3 is configured to reciprocate in a non-rotating state.

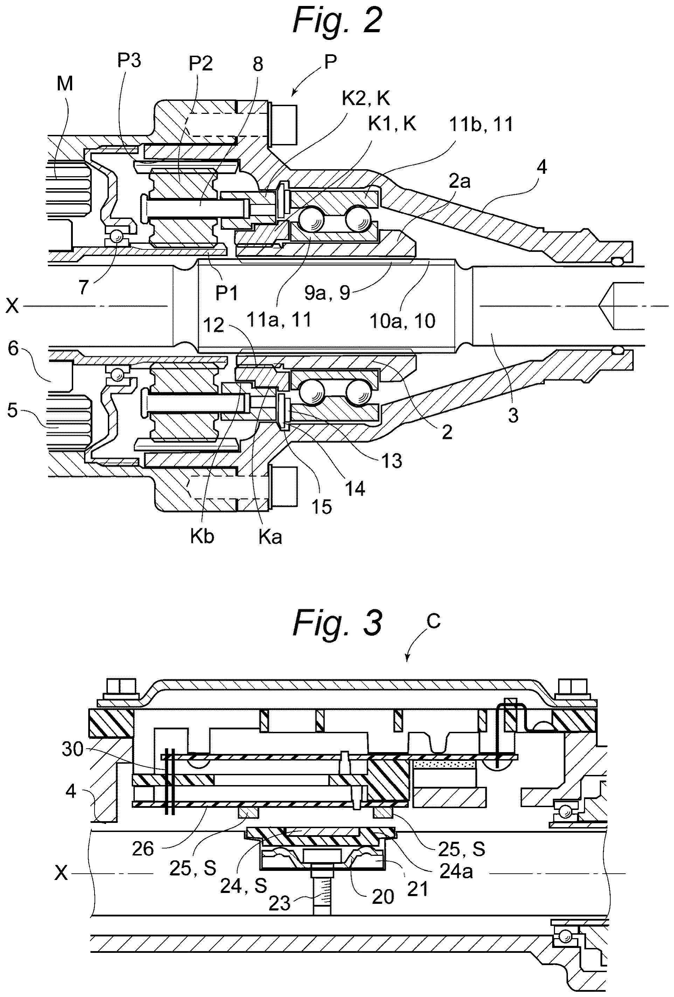

Figs. 1 and 2 illustrate a configuration of the rear wheel steering device A according to the present embodiment. The rear wheel steering device A includes a control unit C provided on the left side of Fig. 1 and the drive unit M provided on the right side of Fig. 1. The control unit C has a pair of elements 25 that measure the displacement state of the rod 3, and calculates the position of the rod 3 on the basis of signals or the like from the elements 25. On the basis of the calculation result, the control unit C supplies a drive signal to the drive unit M to move the rod 3 to a desired position.

### (Drive unit)

As illustrated in Fig. 2, the drive unit M of the present embodiment includes a stator 5 having an axis X along the moving direction of the rear wheel steering device A, and a cylindrical rotor 6 rotating inside the stator 5. The rod 3 is inserted into the cylindrical rotor 6. The rotor 6 is supported, at both sides thereof, in the housing 4 by rotor bearings 7 on both outer sides along the axis X across the facing positions of the stator 5.

### (Planetary gear mechanism)

A planetary gear mechanism P is connected to one end portion of the rotor 6. Specifically, a sun gear P1 is formed on an outer surface of the end portion of the rotor 6. Three planetary gears P2 are meshed with the sun gear P1, and a ring gear P3 fixed to the housing 4 is meshed outside the planetary gears P2.

A carrier K of the planetary gear P2 is screwed and fixed to the outer peripheral side of the nut 2 screwed with the rod 3. The carrier K includes a first carrier K1 fixed to the outer surface of the nut 2 and a second carrier K2 fitted and fixed to the first carrier K1 outside the first carrier K1. Three shaft members 8 supporting the three planetary gears P2 are fixed to the second carrier K2.

The nut 2 has a cylindrical shape, and a female trapezoidal screw 9a as an output gear 9 of the drive unit M is formed on an inner surface thereof. A male trapezoidal screw 10a as a screw portion 10 is formed in an outer surface of the rod 3. The nut 2 is made of brass for providing wear resistance. The rod 3 reciprocates in a non-rotating state with respect to the housing 4 by bringing sliding contact members 21 described later into contact with the inner surface of the housing 4. A bearing portion 11 using a thrust bearing is externally fitted to the outer surface of the nut 2, and the bearing portion 11 is internally fitted to the inner surface of the housing 4.

The first carrier K1 is screwed and fixed to one end of the nut 2 in an externally inserted state with a fixing screw portion 12 interposed therebetween. A bulging portion 2a protruding in the radial direction is formed at the other end portion of the nut 2, and an inner member 11a of the bearing portion 11 is sandwiched along the direction of the axis X by the bulging portion 2a and an end surface of the first carrier K1. With the present configuration, fixing of the bearing portion 11 to the nut 2 and fixing of the first carrier K1 to the nut 2 are simplified, and assembling work of them can be made efficient.

The second carrier K2 holding the planetary gears P2 is externally fitted and fixed to the further outside of the first carrier K1. The external fitting and fixing is performed using two types of fitting portions. One is a cylindrical first fitting portion Ka formed on the back side in the fitting direction along the direction of the axis X when viewed from the second carrier K2 side. The first fitting portion Ka is formed by a cylindrical fitting outer surface formed on the outer surface of the first carrier K1 and a cylindrical fitting inner surface formed on the inner surface of the second carrier K2. The other is a spline-shaped second fitting portion Kb that is on the front side in the fitting direction when viewed from the side of the second carrier K2 and is adjacent to the first fitting portion Ka.

The cross-sectional shape of the second fitting portion Kb perpendicular to the axis X is formed in a star shape, for example. As a result, the first carrier K1 and the second carrier K2 do not rotate relative to each other, and the durable carrier K can be configured. When the first carrier K1 is screwed to the nut 2, the second fitting portion Kb can be used as an engaging portion of a fastening tool. Note that the first carrier K1 and the second carrier K2 are made of a steel material instead of brass in a conventional art to achieve weight reduction and cost reduction.

In the present embodiment, the housing 4 is particularly tapered, and the bearing portion 11 needs to be disposed at the back of the carrier K. Therefore, as the order of attachment, the bearing portion 11 is attached to the nut 2, the bearing portion 11 is sandwiched by the first carrier K1, and then they are fixed to the housing 4. The second carrier K2 is then attached to the first carrier K1.

For fixing the bearing portion 11, an annular spacer 13 that abuts on an outer member 11b of the bearing portion 11 and a retaining ring 14 that abuts on the spacer 13 and retains the positions of the bearing portion 11 and the spacer 13 are used. The retaining ring 14 is, for example, a C-shaped snap ring fitted into a groove portion 15 formed in the inner surface of the housing 4.

After fixing of the bearing portion 11 is completed, the second carrier K2 is fitted and fixed to the first carrier K1. The attachment order of the planetary gears P2 to the second carrier K2 may be either before or after the attachment of the second carrier K2 to the first carrier K1. Note that as illustrated in Fig. 2, the ring gear P3 is fitted to the inner surface of the housing 4.

### (Displacement detecting unit)

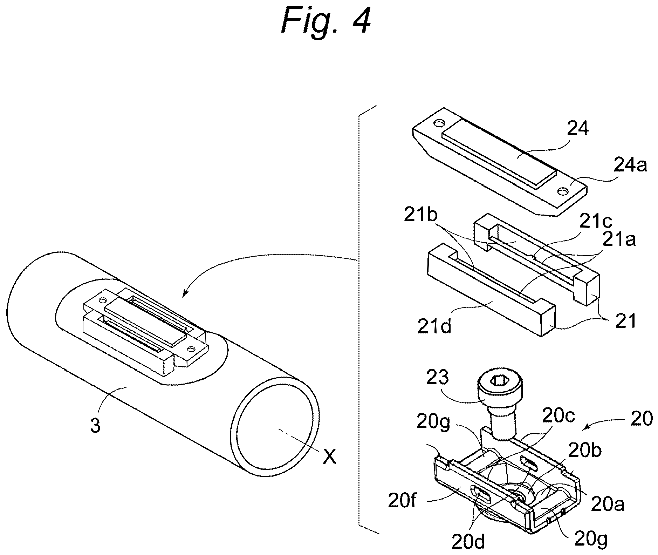

As illustrated in Figs. 3 and 4, a displacement detecting unit S is formed by a magnet 24 and the detecting elements 25. Only the one magnet 24 is provided on the surface of the rod 3. On the other hand, the two elements 25 are provided on a control board 26 along the moving direction of the magnet 24.

### (Magnet)

The magnet 24 has a rod shape, for example, and is attached to the surface of the rod 3 by using a slider 20, the sliding contact members 21, and a magnet block 24a. In the present embodiment, the magnet 24 exhibits a rotation regulating effect so that the rod 3 does not rotate with respect to the housing 4.

As illustrated in Fig. 4, the slider 20 is a member having a U-shaped cross section perpendicular to the axis X. The slider 20 is fixed to the rod 3 by a mounting bolt which is a fastening member 23 through a mounting hole 20b provided in a bottom portion 20a forming the U shape. As an attachment procedure, the rod 3 is inserted into the housing 4, and the slider attachment position of the rod 3 is made to correspond to the positions of guide surfaces, not illustrated, facing each other formed in the opening of the housing 4. In this state, the slider 20 to which the sliding contact members 21 are attached in advance is positioned and fastened by the fastening member 23.

The sliding contact members 21 are attached to the slider 20. The sliding contact members 21 come into sliding contact with the guide surfaces, not illustrated, provided in the housing 4 when the rod 3 reciprocates.

The sliding contact members 21 are attached to the slider 20 by inserting groove-shaped insertion portions 21a formed in the sliding contact members 21 into a pair of protruding portions 20c forming the U shape of the slider 20. Claw portions are formed as engaging portions 21c on inner walls 21b forming the insertion portions 21a of the sliding contact members 21, and the claw portions are engaged with hole portions provided as engaged portions 20d in the pair of protruding portions 20c. By performing the engagement by so-called snap-fitting in this manner, the work of attaching the sliding contact members 21 to the slider 20 is simplified, and the work cost can be suppressed.

The slider 20 is formed of a metal material such as steel or stainless steel, and can reliably receive anti-rotation torque of the rod 3 received as a reaction force from the guide surfaces when the rod 3 reciprocates. On the other hand, the sliding contact member 21 is made of a material having a low friction coefficient such as fluororesin.

In addition, a surface of each of the pair of sliding contact members 21 facing outward is a sliding contact surface 21d, and comes into sliding contact with the guide surface of the housing 4 to prevent rotation of the rod 3. In order to reliably prevent the rotation, outward surfaces of the pair of protruding portions 20c of the slider 20 are formed as planar receiving surfaces 20f, and come into surface contact with the inner walls 21b formed inside the insertion portions 21a of the sliding contact members 21. By bringing such receiving surfaces 20f into contact with the inner walls 21b, the function of regulating rotation of the rod 3 is reliably exerted, and the torque of the rear wheel steering device A can be increased.

As illustrated in Figs. 3 and 4, as the magnet 24, a long magnet is inserted by using a resin material to form a magnet block 24a. In the present embodiment, even in a case where the length of the magnet 24 is short, since the two elements 25 are provided with the magnet 24 interposed therebetween, the detection range can be widened. However, an increase in the length of the magnet 24 is advantageous because the detection range can be further expanded. The magnet block 24a is fixed to the rod 3, but is attached so that an external force that prevents rotation of the rod 3 is not input from the sliding contact members 21 to the magnet 24.

Specifically, as illustrated in Fig. 4, the magnet block 24a is inserted between the pair of sliding contact members 21, and is disposed such that the back surface of magnet block 24a is in contact with two first receiving seats 20g formed on the bottom portion 20a of the slider 20. As a result, the detection surface of the magnet 24 is installed at a predetermined height with respect to the surface of the rod 3.

In addition, attachment hole portions are provided near both end portions of the magnet block 24a in the direction along the axis X. Fixing screws are inserted into the attachment hole portions, and the fixing screws are screwed into female screw portions provided in the rod 3 to fix the magnet block 24a. Note that although not illustrated, a separate locking portion or the like may be provided between the magnet block 24a and the sliding contact member 21 to fix them.

As described above, the slider 20 and the sliding contact members 21 are fixed to the rod 3 inserted into the housing 4, and then the magnet block 24a is positioned and arranged with respect to the sliding contact members 21, whereby the magnet 24 can be easily installed on the rod 3.

According to the present configuration, a force for preventing rotation of the rod 3 does not act on the magnet 24 from the sliding contact members 21 when the rod 3 reciprocates. Therefore, the risk of breakage of the magnet 24 is eliminated, and the displacement detecting unit S having a reasonable structure with improved durability can be obtained.

### (Element)

The position of the rod 3 is detected by the two elements 25 provided on the board constituting the control unit C.

As illustrated in Fig. 3, the control board 26 of the control unit C is disposed above the magnet 24 so as to face downward, and the two elements 25 are provided thereon. The control unit C calculates the position of the magnet 24 on the basis of the signals obtained by the elements 25, and transmits a drive signal for moving the rod 3 to a desired position to the drive unit M.

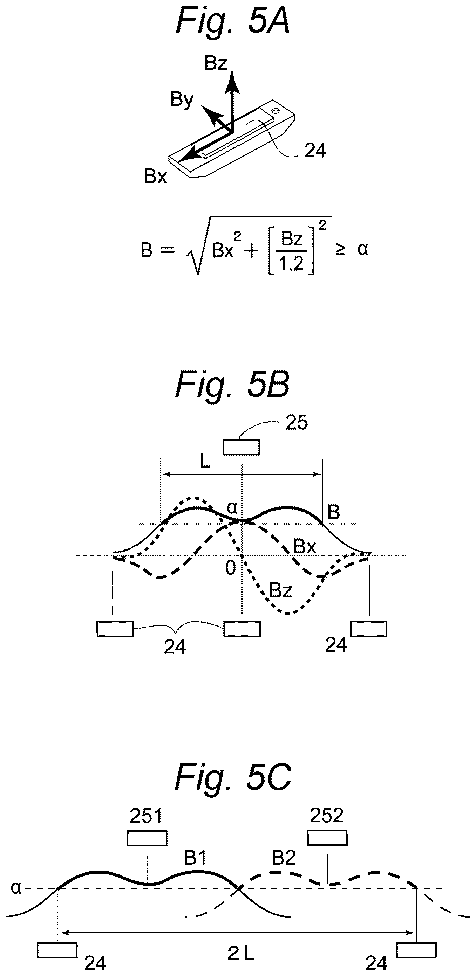

A method of calculating the position of the rod 3 is illustrated in Figs. 5A to 7. Figs. 5A, 5B, and 5C illustrate a state in which the elements 25 detect the magnetic field intensity of the magnet 24.

Fig. 5A illustrates magnetic fields generated by the magnet 24 and detected by the element 25. The element 25 used in the present embodiment can detect a first-direction magnetic field Bx along the moving direction of the magnet 24 and a second-direction magnetic field Bz orthogonal to the moving direction and along a plane including the two elements 25 and the magnet 24. Incidentally, a third-direction magnetic field By in the direction orthogonal to these directions is omitted because it is weak.

Fig. 5B illustrates magnetic field detection results obtained by the element 25 according to the position of the magnet 24. In a case where the magnet 24 is moved with respect to the element 25 placed at a center position, the long broken line in Fig. 5B indicates the detection result of the first-direction magnetic field Bx, and the short broken line in Fig. 5B indicates the detection result of the second-direction magnetic field Bz. The first-direction magnetic field Bx and the second-direction magnetic field Bz are detected as a synthetic magnetic field B by a synthesis formula illustrated in Fig. 5A.

In the formula, α represents a detection lower limit value of the magnetic field that can be detected by the element 25. As the detection lower limit value is set higher, the position detection accuracy of the magnet 24 is improved. However, the range in which displacement of the magnet 24 is measured is shortened. On the other hand, if the detection lower limit value is lowered, the range in which displacement of the magnet 24 is measured is expanded, but the detection value obtained by the element 25 becomes small, so that the position detection accuracy is lowered.

In the present embodiment, for example, as illustrated in Fig. 5B, a detection value α when the magnet 24 is immediately below one element 25 is set as the detection lower limit value. As a result, a detection value is reliably obtained for a region indicated by a thick solid line in the synthetic magnetic field B illustrated in Fig. 5B. In this case, even when the magnet 24 and the element 25 do not overlap in the direction orthogonal to the moving direction of the magnet 24, the position of the magnet 24 can be accurately detected, and a wide detection range L can be secured for detection of the position of the magnet 24.

As a result, the length of the magnet 24 is set to be shorter than that in the conventional art. For example, when the distance between end portions farthest from each other in the combinations of an end portion of a first element 251 and an end portion of a second element 252, which are the pair of elements 25, is defined as an inter-element distance, the length of the magnet 24 along the axis X is shorter than the inter-element distance.

The range in which the magnetic field of the magnet 24 is detected by one element 25 is formed on both sides of the element 25 along the axis X. That is, with respect to the pair of elements 251 and 252 arranged at predetermined positions, the position of the magnet 24 is not limited to the position between both the elements 251 and 252, and the magnet 24 can be displaced to the further outside of one of the elements 25. Therefore, even in a case where only the one magnet 24 is used, the magnetic field detection range can be expanded by the two elements 251 and 252.

Fig. 5C illustrates a state in which a first synthetic magnetic field B1 detected by the first element 251 and a second synthetic magnetic field B2 detected by the second element 252 are combined. As a result, it is possible to obtain a synthetic detection range 2L in which the length of the range in which the position of the magnet 24 is detected is about two times the detection range L.

As described above, the present configuration includes the pair of elements 251 and 252 dispersedly arranged along the axis X and arranged in a state where the ranges in which the strength of the magnetic field formed by the magnet 24 is detected overlap with each other, and includes the control unit C that calculates the position of the magnet 24 along the axis X with respect to the pair of elements 251 and 252 from the detection result obtained by at least one element 25 of the pair of elements 251 and 252.

As a result, the plurality of elements 25 can be arranged with respect to the magnet 24, and the element 25 that detects the magnetic field of the magnet 24 can be sequentially changed when the magnet 24 reciprocates.

As to how much the length of the magnet 24 can be shortened with respect to the distance between the pair of elements 251 and 252, in a case where the magnet 24 is positioned between the pair of elements 251 and 252, the length can be set such that the magnet 24 and the pair of elements 251 and 252 do not overlap each other simultaneously in the direction orthogonal to the axis X. The shortest length of the magnet 24 is appropriately determined on the basis of the magnetic field intensity formed by the magnet 24 and the magnetic field detection ranges of the pair of elements 251 and 252.

When the shortest length of the magnet 24 is determined, the movement range in which the position of the magnet 24 can be detected is determined. That is, since the position of the magnet 24 that can be detected by each element 25 is determined also outside the first element 251 and outside the second element 252, the region between both the positions is the movement range of the magnet 24.

By providing the plurality of elements 25 as described above, the range in which the position of the magnet 24 is detected can be expanded while keeping the dimension of the magnet 24 small. If the dimension of the magnet 24 is kept compact, inconvenience such as interference of the magnet 24 with another object in the reciprocating operation of the rod 3 to which the magnet 24 is attached hardly occurs, and the reciprocating stroke of the rod 3 is easily increased.

With the present configuration, the rear wheel steering angle can be increased while keeping the device size compact, and the low-cost rear wheel steering device A excellent in mountability can be obtained.

### (Reference position of magnet)

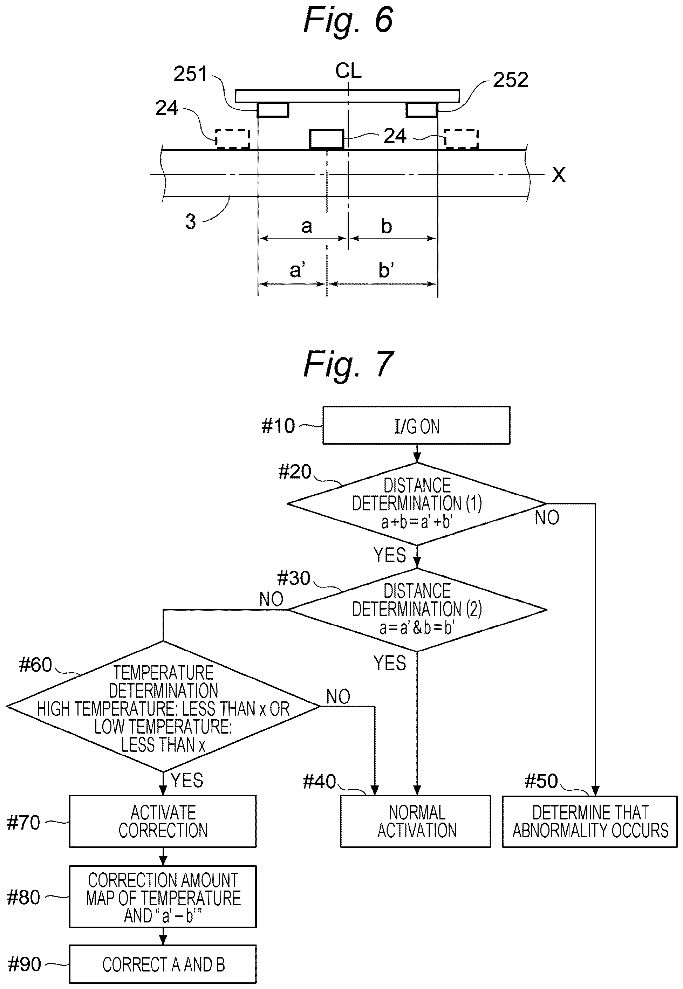

As illustrated in Fig. 6, when the rod 3 is at a reference position with respect to the housing 4, the position of the magnet 24 along the axis X is set to be different from a center position CL between the pair of elements 25 in the direction along the axis X.

One of the elements 25 that is closer to the center position of the magnet 24, that is, the element 25 having a higher detection value of the magnetic field intensity is used for position detection of the magnet 24. Here, the initial position of the magnet 24 is set such that the distance to the first element 251 is a', the distance to the second element 252 is b', and a' < b' is satisfied.

In this manner, by making the distances between the magnet 24 and the respective elements 25 different at the reference position of the rod 3, the element 25 used in a case where the rod 3 is at the reference position can be fixed to one of the elements 25 that is closer to the magnet 24. In the rear wheel steering device A having the present configuration, the element 25 used at the steering angle neutral position is always fixed to the element 25 closer to the magnet 24. Therefore, for example, when an IG switch of the vehicle is turned ON and calculation of the displacement detecting unit S and the control unit C is started, the fluctuation of whether the position of the magnet 24 is determined on the basis of the measurement value obtained by the first element 251 or the second element 252 is eliminated, and the stability of the steering drive is increased.

As illustrated in Fig. 1, in the rear wheel steering device A of the present embodiment, for example, a temperature detecting device T is provided outside the housing 4 close to one end portion thereof. As the temperature detecting device T, various thermocouples and the like can be used. As a result, the temperature of the rod 3 is measured, and the dimensional change of the rod 3 is calculated by the control unit C. Since the rod 3 is a movable member, a thermocouple or the like is not necessarily in contact with the rod 3. In Fig. 1, a thermocouple is provided at a part of the housing 4 that slidably supports the rod 3.

The control unit C stores the magnetic field intensity value of the magnet 24 at the reference position, and in a case where the temperature detected by the temperature detecting device T is within a predetermined range, the magnetic field intensity value is corrected according to the detected temperature, and the position of the rod 3 is adjusted.

A specific correction method will be described with reference to Fig. 6 and the flowchart of Fig. 7.

When the ignition switch of the vehicle is turned ON (#10), the control unit C calculates a first distance a' based on the detection value obtained by the first element 251 and a second distance b' based on the detection value obtained by the second element 252. It is determined whether or not the total distance of the first distance a' and the second distance b' is equal to the total distance of an initial first distance a and an initial second distance b stored in the control unit C (#20).

At this time, if the total distance is unchanged, the process proceeds to the next step #30. On the other hand, if there is an error in the total distance, it is assumed that any of the systems has a problem and it is determined that abnormality occurs (#50), and a warning display is displayed on an instrument panel, for example.

In step #30, it is determined whether or not the initial first distance a and the first distance a' are equal and the initial second distance b and the second distance b' are equal (#30). Although the initial first distance a and the initial second distance b are equal in Fig. 6, in the present embodiment, it is assumed that the initial first distance a and the initial second distance b are different from the beginning, the initial first distance a and the first distance a' are equal, and the initial second distance b and the second distance b' are equal. If it is determined that this condition is satisfied, it is determined that the position of the magnet 24, that is, the position of the rod 3 is at the reference position, and normal activation (#40) ends.

On the other hand, in a case where the determination condition in step #30 is not satisfied, the control unit C checks the output of the temperature detecting device T (#60). That is, the reason why the position of the magnet 24 that should be at the initial value is shifted is considered to be expansion/contraction of the rod 3 due to a change in temperature. Here, in particular, two cases of a case where the temperature of the rod 3 is high and a case where the temperature of the rod 3 is low are considered. The high temperature condition is appropriately set in consideration of, for example, a heating condition accompanying sliding between the rod 3 and the housing 4, heat transfer from an exhaust muffler, and the like. On the other hand, the low temperature condition is appropriately set in consideration of, for example, the temperature range of the use environment. Specifically, the temperature is in a range of about minus several tens of °C to 100°C.

In a case where the temperature condition is included in the determination value in step #60, the process proceeds to step #70, and the control unit C activates correction calculation. Thus, the correction amount relating to the position adjustment of the rod 3 is checked using a correction amount map on the basis of the detected temperature (#80). This correction amount is obtained from the correlation of the difference between the first distance a' and the second distance b' according to the detected temperature stored as a map by the control unit C, and the motor is driven to correct the initial first distance a and the initial second distance b for the position of the rod 3 (#90). Note that such temperature correction is performed only when the ignition switch is turned ON.

By providing the temperature detecting device T as in the present configuration, the reference position of the magnet 24 can be appropriately corrected. That is, since the expansion/contraction amount of the rod 3 is calculated from the difference between the magnetic field intensity value stored in the control unit C and the detection value of temperature at the time of measurement, and the reference position of the rod 3 is optimized, the steering state of the rear wheel can be always optimized.

As described above, in the rear wheel steering device A having the present configuration including the one magnet 24 and the two elements 25, the element 25 that detects the magnetic field of the magnet 24 can be sequentially switched when the magnet 24 reciprocates. The magnetic field detection range of one element 25 is determined by the size and the strength of the magnetic field of the magnet 24, but the range in which the magnetic field of the magnet 24 is detected is increased by overlapping the magnetic field detection ranges of the pair of elements 25.

As a result, the position detection range can be expanded while keeping the dimension of the magnet 24 small. If the magnet 24 is compact, the attachment property thereof to the rod 3 is improved, the interference of the rod 3 with another object is eliminated, and the reasonable displacement detecting unit S can be obtained. With such a configuration, the rear wheel steering device A having excellent mountability can be easily obtained.

The rear wheel steering device of the present disclosure can be widely applied to a device having a configuration in which a rod is reciprocated by a drive unit, a magnet and an element are arranged on the rod and a housing, respectively, the rod and the housing moving relative to each other, and displacement of the rod can be measured.

## Claims

1. A rear wheel steering device (A) comprising:
a drive unit (M) that is provided in a housing (4);
a rod (3) that is provided in the housing (4) and reciprocates along an axis (X) of the rod (3) in a non-rotating state by the drive unit (M); and
a displacement detecting unit (S) that is provided in the housing (4) and detects displacement of the rod (3),
the displacement detecting unit (S) including
a magnet (24) that is fixed to the rod (3) and reciprocates together with the rod (3),
a pair of elements (25) that are dispersedly arranged along the axis (X) and are arranged in a state in which ranges in which strength of a magnetic field formed by the magnet (24) is detected overlap with each other, and
a control unit (C) that calculates a position of the magnet (24) along the axis (X) with respect to the pair of elements (25) from a detection result obtained by at least one of the pair of elements (25),
wherein when a distance between an end portion of one of the pair of elements (25) and an end portion of another of the pair of elements (25), the end portions farthest from each other among combinations of end portions of the pair of elements (25), is defined as an inter-element distance, a length of the magnet (24) along the axis (X) is shorter than the inter-element distance.

2. The rear wheel steering device (A) according to Claim 1, wherein the length of the magnet (24) is set so that the magnet (24) and the pair of elements (25) do not overlap each other simultaneously in a direction orthogonal to the axis (X) in a case where the magnet (24) is positioned between the pair of elements (25).

3. The rear wheel steering device (A) according to Claim 1, wherein when the rod (3) is at a reference position with respect to the housing (4), a position of the magnet (24) along the axis (X) is set to be different from a center position of the pair of elements (25) in a direction along the axis (X).

4. The rear wheel steering device according to Claim 3,
wherein a temperature detecting device (T) is provided outside the housing (4),
the control unit (C) stores a magnetic field intensity value of the magnet (24) at the reference position, and
a position of the rod (3) is adjusted by correcting the magnetic field intensity value according to a detected temperature detected by the temperature detecting device (T) in a case where the detected temperature is within a predetermined range.
